# FASCICULE DE BREVET EUROPEEN

(11) **EP 1 835 269 B1**
(45) Date de publication et mention de la délivrance du brevet: **25.08.2010**
(21) Numéro de dépôt: 07290245.5
(22) Date de dépôt: 27.02.2007
(51) Int. Cl.: G01F 23/22

(54) **Détecteur de niveau, notamment pour une bouteille à gaz**
Füllstandanzeiger, insbesondere für eine Gasflasche
Level detector, in particular for a gas bottle

(30) Priorité: 17.03.2006 FR 0602356
(43) Date de publication de la demande: 19.09.2007
(73) Titulaire: COMPAGNIE DES GAZ DE PETROLE PRIMAGAZ, 75829 Paris cedex 17 (FR)
(72) Inventeur: Bouvier, Daniel, 75011 Paris (FR)
(74) Mandataire: Eidelsberg, Victor Albert

(56) Documents cités:
- WO-A-2004/003488
- DE-A1- 3 632 855
- US-A1- 2005 081 623

## Description

La présente invention se rapporte aux détecteurs de niveau, et plus particulièrement aux détecteurs de niveau bas pour une bouteille à gaz.

L'une des craintes les plus répandues chez l'utilisateur de bouteilles de gaz domestique de butane est le manque de gaz. En effet, du fait de leurs caractéristiques physiques et des appareils d'utilisation associés (détendeurs), les récipients de gaz de pétrole liquéfié cessent brutalement de fonctionner en fin de bouteille sans que l'utilisateur ait été averti.

Une telle situation est fâcheuse : impossibilité de préparer le petit-déjeuner ou, pire, arrêt de la cuisson en pleine préparation culinaire.

Au US 2005/081623 et au DE 36 32 855 A1, on décrit un détecteur de niveau qui comprend une sonde de température apte à détecter, entre deux niveaux, en hauteur, une différence de température et un circuit électrique relié à la sonde de température et conçu pour émettre un signal d'alerte lorsque la différence de température est supérieure à un seuil prescrit.

Ce dispositif donne l'alerte lorsque le niveau de gaz dans la bouteille descend en dessous d'une limite choisie par l'utilisateur, lui permettant ainsi de prendre les mesures nécessaires pour éviter la panne d'alimentation.

Le dispositif fait appel à la caractéristique principale des GPL qui sont liquides à la température ambiante sous une pression donnée dépendant de leurs caractéristiques (courbes TV).

Le gaz se présente sous la forme d'une phase liquide rassemblée à la partie inférieure de la bouteille et surmontée d'une phase gazeuse.

Lorsque la phase gazeuse est reliée à l'appareil d'utilisation, elle permet l'alimentation de ce dernier, pour se régénérer elle fait appel à l'ébullition de la phase liquide disposée à la partie inférieure de la bouteille. Cette ébullition ne peut se faire qu'en empruntant de la chaleur d'abord dans la phase liquide elle-même (chaleur latente), puis ensuite à l'atmosphère par le biais de la paroi du récipient généralement bon conducteur (tôle).

Cet emprunt de chaleur entraîne une baisse de température très nette de la paroi du récipient, et ceci uniquement dans la partie en contact avec la phase liquide, la phase gazeuse étant beaucoup moins conductrice de la chaleur.

Le phénomène dépend, pour un gaz donné, de la température extérieure et du débit, il est par exemple particulièrement sensible si le débit est élevé, allant jusqu'à provoquer la formation de givre sur la paroi extérieure de la bouteille lors de débits élevés.

La quantité d'énergie thermique à fournir pour amener à l'ébullition 1 kg de GPL est de l'ordre de 100 W, le phénomène est sensible pour des débits correspondant à l'utilisation normale des réchauds et cuisinières ; on constate couramment des différences de température allant jusqu'à plusieurs degrés entre la phase gazeuse et la phase liquide au droit de la génératrice de la bouteille ; on comprend donc que si l'on dispose un moyen de mesure de la température de cette dernière, on va pouvoir déterminer avec précision la hauteur du niveau liquide et, par voie de conséquence, la quantité de gaz restant dans le réservoir.

Des valeurs typiques sont pour la bouteille de gaz butane à moitié pleine par une ambiance de 20°C alimentant un brûleur 1 feu durant 1/2 heure :
- différence de température de l'ordre de 1 à 2°C
- définition de la hauteur mouillée de l'ordre de 2 à 3 mm.

La présente invention vise à garantir à l'utilisateur une implantation identique du dispositif à chaque mise en place sur une bouteille différente, par les dispositions de la revendication 1. Des perfectionnements sont donnés dans les sous-revendications.

On envisage d'utiliser un boîtier en matière non conductrice et de couleur claire, maintenu à la partie inférieure de la bouteille par des aimants - la partie inférieure du dispositif venant prendre appui sur la zone du pied de la bouteille, de manière à définir une implantation identique à chaque mise en place.

Le dispositif comprend ainsi un moyen de mise de la sonde de température en une position en hauteur déterminée à l'avance. Le moyen de mise en position de la sonde de température est avantageusement un becquet issu du bas du détecteur. Le moyen de mise en position de la sonde de température est, de préférence, du côté du détecteur où la sonde de température débouche à l'extérieur. Le détecteur occupe ainsi aussi peu de place que possible à l'extérieur de la bouteille à gaz.

Une des formes préférées de réalisation consiste à placer, sur la paroi de la bouteille dans la région correspondant à la quantité de produit définissant la réserve, deux capteurs de température séparés par une distance très supérieure à la définition de mesure de température de surface, par exemple 2 à 3 cm, de telle sorte que lorsque le niveau de gaz descend, l'un des deux capteurs (celui placé à la partie la plus basse de la bouteille) A se trouve à une température inférieure à celui placé à la partie la plus haute B, générant ainsi un signal électrique susceptible d'être transformé en un signal lumineux et/ou sonore.

Une telle disposition présente, en outre, les avantages suivants : si, du fait d'un faible débit et/ou d'un débit de faible durée, l'abaissement de température n'a pu être détecté, il le sera probablement car le dispositif restera sensible dans toute la zone B/A, augmentant ainsi considérablement les possibilités de détection.

Par ailleurs, la baisse de température sera plus rapide en fin de bouteille car les produits légers tels que propane, etc. se seront évaporés en début de bouteille.

Il est prévu, un moyen d'application du détecteur à la surface de la bouteille sur au moins les deux niveaux, notamment à la surface extérieure de la bouteille à gaz, de manière à ce que la sonde de température soit bien en position non seulement au bon niveau, mais aussi à la bonne distance, suivant l'horizontale, de la surface. L'application du détecteur à la surface peut s'effectuer par des moyens simples comme une sangle ceinturant la bouteille, mais plus avantageusement par un ensemble d'aimants permanents disposés de telle sorte que seule la position correcte du boîtier en permette l'adhérence sur la paroi de la bouteille qui est en un matériau attiré magnétiquement par l'aimant.

Les capteurs de température peuvent utiliser plusieurs types de technologie : thermistances, sondes platine, capteurs infrarouges. La sonde peut être aussi un thermocouple.

De manière à permettre au dispositif d'avoir une autonomie importante, les capteurs et les équipements d'alerte (voyant et/ou buzzer) ne sont alimentés qu'à des intervalles espacés et durant une durée courte, par exemple interrogation toutes les minutes durant une durée de 5 secondes ; l'alimentation du dispositif se fait avantageusement par un contact sur la paroi de la bouteille.

Suivant un mode de réalisation très préféré, le détecteur de niveau comprend un boîtier qui n'est ouvert que du côté où la sonde de température débouche à l'extérieur. Le boîtier assure les fonctions suivantes :
I - Positionnement des capteurs par rapport à la bouteille dans la zone permettant la détection.
II- Protection des capteurs contre les apports thermiques radiatifs externes parasites.
III- Protection des capteurs contre les échanges thermiques externes parasites (courants d'air).
IV - Logement du circuit du détecteur, de sa source d'alimentation et de ses annexes.

De préférence, les deux niveaux entre lesquels est détectée la différence de température sont disposés dans le bas de la bouteille, le niveau le plus haut étant plus bas que le quart inférieur de la bouteille. Les deux niveaux sont distants de 3 mm au plus.

Aux dessins annexés, donnés uniquement à titre d'exemple:
la Figure 1 est une vue en élévation d'une bouteille à gaz munie de détecteur de niveau et
la Figure 2 est une vue en perspective du détecteur de niveau.

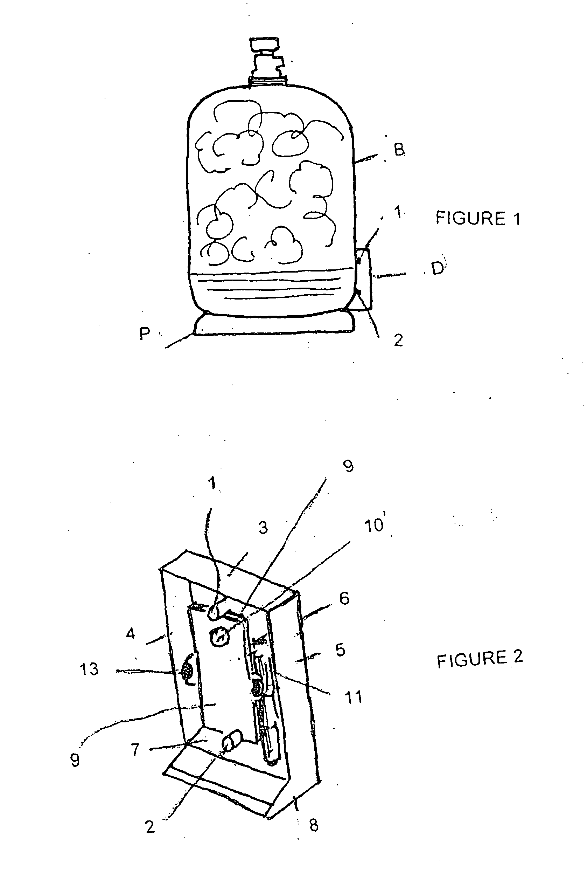

La bouteille B à gaz de pétrole liquéfié, représentée à la Figure 1, est en un matériau métallique et munie, outre d'un détendeur, d'un détecteur D de niveau ayant deux capteurs 1, 2 de température disposés tous deux dans le quart inférieur de la bouteille B à une distance l'un de l'autre de 3 mm.

La bouteille B a un pied P.

Le détecteur représenté à la Figure 2 comprend un boîtier formé d'une boîte sensiblement parallélépipédique ayant une face 3 supérieure, deux faces 4, 5 verticales, une face 6 de fond verticale, une face 7 inférieure prolongée d'un becquet 8 ayant en section transversale une forme sensiblement triangulaire à sommet libre dirigé vers l'extérieur. A l'opposé de la face 6 de fond, la boîte est ouverte. Dans la boîte, est fixé un circuit 9 électrique alimenté par des piles 10. A la verticale de la face ouverte, apparaissent sur la médiatrice verticale de cette face les deux capteurs 1 et 2 constituant la sonde de température. Le circuit 9 électrique est relié à la sonde 1, 2, et est agencé de façon à émettre un signal d'alerte lorsque la différence de température entre les deux capteurs 1 et 2 est supérieure à un seuil prescrit. Un interrupteur 11 ferme le circuit lorsque les deux capteurs 1, 2 sont appliqués par l'intermédiaire d'aimants 13 à la bouteille B.

Le fonctionnement est le suivant : l'utilisateur place le détecteur sur la partie inférieure de la bouteille B, l'interrupteur 11 ferme le circuit 9 et le détecteur est alimenté. Si les températures des deux capteurs 1, 2 sont voisines ou identiques - ce qui est le cas quand ils font face à du liquide -, il n'y a pas de déclenchement de l'alarme ; par contre, lorsque le niveau baisse, la température du capteur 2 face au liquide devient plus basse que celui 1 faisant face à la phase gazeuse, et l'alerte est donnée.

Suivant une variante, le détecteur a une plaque servant de moyen de mise en position et la plaque vient sous le pied de la bouteille.

## Revendications

1. Détecteur de niveau d'une bouteille de gaz liquéfiée, en un matériau métallique et pouvant être attiré magnétiquement par un aimant et ayant un pied, détecteur qui est mis à l'extérieur de la bouteille et qui comprend une sonde (1, 2) de température apte à détecter, entre deux niveaux, en hauteur, une différence de température, et un circuit (9) électrique relié à la sonde (1, 2) de température et conçu pour émettre un signal d'alerte lorsque la différence de température est supérieure à un seuil prescrit, ainsi qu'un moyen (8) de mise de la sonde de température en une position en hauteur déterminée à l'avance, **caractérisé en ce que** le moyen de mise en position de la sonde de température est soit un becquet (8) issu du bas du détecteur et complémentaire du pied soit une plaque du détecteur venant sous le pied de la bouteille.

2. Détecteur suivant la revendication 1, **caractérisé en ce que** le moyen de mise en position de la sonde de température est du côté du détecteur où la sonde de température débouche à l'extérieur.

3. Détecteur suivant l'une des revendications 1 à 2, **caractérisé par** un moyen (13) d'application du détecteur à la surface de la bouteille de gaz sur au moins les deux niveaux.

4. Détecteur suivant la revendication 1 à 3, **caractérisé en ce que** le moyen d'application du détecteur comprend un aimant.

5. Détecteur suivant l'une des revendications précédentes, **caractérisé en ce qu'**il comprend un générateur (11) électrochimique d'alimentation du circuit (9) électrique.

6. Détecteur suivant l'une des revendications 3 à 5, **caractérisé en ce qu'**il comprend un boîtier, de préférence en matière non conductrice de la chaleur et de couleur claire, ouvert que du côté où la sonde de température débouche à l'extérieur.

## Claims

1. A level-detector for a liquefied-gas bottle, made of a metallic material and being capable of being attracted magnetically by a magnet and having a base, which detector is placed on the exterior of the bottle and comprises a temperature probe (1, 2) suitable for detecting, between two levels, vertically, a difference in temperature, and an electric circuit (9) connected to the temperature probe (1, 2) and designed to emit a warning signal when the difference in temperature is greater than a prescribed threshold, as well as means (8) for placing the temperature probe in a position vertically that is determined in advance, **characterised in that** the means for placing the temperature probe in position is either a spike (8) issuing from the bottom of the detector and complementing the base, or a plate of the detector coming underneath the base of the bottle.

2. A detector according to claim 1, **characterised in that** the means for placing the temperature probe in position is on the side of the detector where the temperature probe opens onto the exterior.

3. A detector according to one of claims 1 to 2, **characterised by** a means (13) for applying the detector to the surface of the gas bottle at at least the two levels.

4. A detector according to claim 1 to 3, **characterised in that** the means for applying the detector comprises a magnet.

5. A detector according to one of the preceding claims, **characterised in that** it comprises an electrochemical generator (11) for feeding the electric circuit (9) .

6. A detector according to one of claims 3 to 5, **characterised in that** it comprises a case, preferably made of non-thermoconducting material and of a light colour, open only on the side where the temperature probe opens onto the exterior.

## Patentansprüche

1. Niveau-Detektor einer Flüssiggasflasche aus metallischem Material, die durch einen Magneten magnetisch angezogen werden kann und einen Fuß aufweist, wobei der Detektor am Äußeren der Flasche angeordnet ist und eine Temperatursonde (1, 2), die zur Erfassung einer Temperaturdifferenz zwischen zwei Höhenniveaus ausgelegt ist, und eine elektrische Schaltung (9) aufweist, die elektrisch mit der Temperatursonde (1, 2) gekoppelt und zur Aussendung eines Warnsignal dann, wenn die Temperaturdifferenz oberhalb einer vorgegebenen Schwelle liegt, vorgesehen ist, sowie weiterhin ein Mittel (8) zur vorhergehenden Positionierung der Temperatursonde in einer bestimmten Höhenposition aufweist, **dadurch gekennzeichnet, dass** das Mittel zur Positionierung der Temperatursonde ein Spoiler bzw. eine Backe (8), der bzw. die vom Boden des Detektors ausgeht und komplementär zum Fuß ist, oder eine Platte des Detektors ist, die unter dem Fuß der Flasche hervorkommt.

2. Detektor nach Anspruch 1, **dadurch gekennzeichnet, dass** sich das Mittel zur Positionierung der Temperatursonde an derjenigen Seite des Detektors befindet, an der die Temperatursonde nach außen hervorkommt.

3. Detektor nach einem der Ansprüche 1 bis 2, **gekennzeichnet durch** ein Mittel (13) zur Anbringung des Detektors an der Oberfläche der Gasflasche mindestens auf den beiden Niveaus.

4. Detektor nach Anspruch 1 bis 3, **dadurch gekennzeichnet, dass** das Mittel zur Anbringung des Detektors einen Magneten umfasst.

5. Detektor nach einem der vorhergehenden Ansprüche, **dadurch gekennzeichnet, dass** er einen elektrochemischen Generator (11) zur Speisung der elektrischen Schaltung (9) aufweist.

6. Detektor nach einem der Ansprüche 3 bis 5, **dadurch gekennzeichnet, dass** er ein Gehäuse, vorzugsweise aus einem thermisch nicht leitenden Material und klarer bzw, heller Farbe, umfasst, das nur an der Seite, an der die Temperatursonde nach außen tritt, offen ist.
